# EUROPEAN PATENT SPECIFICATION

(11) **EP 3 871 491 B1**
(45) Date of publication and mention of the grant of the patent: **11.09.2024**
(21) Application number: 20159263.1
(22) Date of filing: 25.02.2020
(51) Int. Cl.: A01G 9/14, E04D 13/064, E04D 3/08

(54) **A MOUNTING ELEMENT AND A SYSTEM FOR MOUNTING A SUPPORTING BEAM AND A ROD TO EACH OTHER**
BEFESTIGUNGSELEMENT UND SYSTEM ZUR BEFESTIGUNG EINES TRAGEBALKENS UND EINER STANGE MITEINANDER
ÉLÉMENT ET SYSTÈME DE MONTAGE D'UNE POUTRE ET D'UN CHEVRON L'UN SUR L'AUTRE

(43) Date of publication of application: 01.09.2021
(73) Proprietor: Boal Systemen B.V., 2691 HC 's-Gravenzande (NL)
(72) Inventor: VAN HOLSTEIJN, Gerardus Jacobus Maria, 2294 CM Wateringen (NL)
(74) Representative: De Vries & Metman

(56) References cited:
- EP-A1- 3 598 890
- EP-A2- 1 036 496
- NL-C2- 1 026 913
- US-A1- 2007 094 999

## Description

The present invention relates to a system for mounting a supporting beam and a rod to each other, such as in a roof of a greenhouse, comprising a supporting beam, a rod which is mountable to the supporting beam such that in a mounted condition the rod is supported by the supporting beam and extends transversely with respect to the supporting beam, a mounting element which is attachable to the rod in a predefined mutual position of the rod and the mounting element and which mounting element is lockable to the supporting beam in longitudinal direction of the supporting beam and in transverse direction of the supporting beam at least in a direction away therefrom.

Such a system is known from NL 1042197. The known system is applied in a greenhouse in which the supporting beam is formed by a gutter profile to which a plurality of rods are fixed through respective mounting elements. The rods support glass panes. The mounting element can be fixed to the rod through a screw when the rod and the mounting element are in the predefined mutual position, whereas the mounting element can be locked to the gutter profile in longitudinal direction thereof and also in transverse direction of the gutter profile in a direction away therefrom. Hence, in an assembled condition of the system the rod is locked with respect to the gutter profile in a direction away from the gutter profile through the mounting element; in opposite direction the rod rests against the gutter profile.

US 2007/094999 is related to a connector for a roof beam which engages a cooperating formation of an eaves and/or ridge beam or a component of a roof system associated with either the ridge or eaves beam in a snap-fit manner.

An object of the invention is to provide a system which facilitates to assemble the system.

This object is accomplished with the system according to the invention as defined in claim 8 and with the mounting element as defined in claim 1.

The presence of the retaining portion provides a predefined position in longitudinal direction of the supporting beam where the rod should be placed after the mounting element is locked to the supporting beam. During assembly the mounting element can be locked to the supporting beam prior to placing the rod against the retaining portion of the mounting element, after which the rod and the mounting element can be attached to each other at that position of the rod, i.e. in the predefined mutual position of the rod and the mounting element.

In case of applying the system in a greenhouse, the supporting beam may be a gutter profile which is made of extruded aluminium, to which a rod is mounted through the mounting element.

In a practical embodiment the retaining portion comprises a plate, which extends transversely with respect to the longitudinal direction of the supporting beam when the mounting element is locked to the supporting beam. The plate may extend upwardly from the support beam.

The mounting element of the system may be provided with a projection which fits in a complementary hole in the supporting beam so as to lock the mounting element to the supporting beam in longitudinal direction of the supporting beam.

The mounting element is provided with a hook which is engageable behind an edge of the supporting beam so as to lock the mounting element to the supporting beam in transverse direction of the supporting beam in a direction away therefrom.

The above-mentioned projection may project from the hook.

In a particular embodiment the edge is formed by a groove which extends in longitudinal direction of the supporting beam along a rod supporting surface for supporting the rod. The edge may be adjacent to the rod supporting surface such that it borders the rod supporting surface.

The hook is an elongated member extending in longitudinal direction of the supporting beam when the mounting element is locked to the supporting beam, wherein the retaining portion extends from the hook in transverse direction of the longitudinal direction of the hook. The oblong shape of the hook provides the opportunity to apply a single locking location for locking the mounting element with respect to the supporting beam in longitudinal direction thereof, for example by a projection in a complementary hole, since the oblong shape may prevent the mounting element from rotating about the single locking location when exerting a force onto the retaining portion in longitudinal direction of the supporting beam.

The hook has two opposite ends in its longitudinal direction, wherein the retaining portion extends from one end whereas the other end is a free end. This keeps the mounting element free at opposite sides of the retaining portion next to the hook.

The mounting element may be provided with a bottom portion to be coupled to a lower side of the rod, which bottom portion extends in transverse direction of the retaining portion. This makes the mounting element attachable to the rod in the predefined mutual position of the rod and the mounting element, wherein a fixing element, such as a screw, can be screwed through the bottom portion into the rod from below, for example. It is also possible to fix the bottom portion and/or the retaining portion to the rod through other means, such as a clip, a bracket, or the like, for example made of stainless steel.

More specifically, the bottom portion and the hook may extend in the same direction from the retaining portion leaving an opening between the bottom portion and the hook. The opening provides the opportunity to place the rod directly onto the supporting beam whereas the mounting element locks the rod with respect to the supporting beam in a direction away from the supporting beam by attaching the bottom portion and/or the retaining portion to the rod. In this case, the mounting element has a U-shape, of which one leg is formed by the bottom portion and the other leg is formed by the hook, wherein both legs project from the retaining portion. The hook and the bottom portion lie in a first plane whereas the retaining portion extends in a second plane transversely with respect to the first plane. This shape of the mounting element provides the opportunity to place an end portion of the rod onto the gutter profile at a distance from the mounting element and move the rod towards the retaining portion in the predefined mutual position whereas the end portion of the rod can stay on the gutter profile, i.e. without the necessity of lifting it. This facilitates assembling of the system.

The bottom portion may be provided with a rib which extends parallel to the retaining portion so as to enable locking the rod between the rib and the retaining portion, wherein the retaining portion extends beyond the rib as seen from the bottom portion. The rib has a smaller height than the retaining portion in order to avoid obstruction of the rod when moving the rod along the supporting beam in a direction towards the retaining portion.

More generally, preferably, in an assembled condition of the system the rod is directly supported by the supporting beam at a distance from the hook in a direction away from the supporting beam, for example by the rod supporting surface as described hereinbefore, since this prevents the mounting element from supporting the rod in upward direction.

The bottom portion may be provided with a drain groove for draining condensate from the rod to the supporting beam in an assembled condition of the system. The drain groove will be located at an upper side of the bottom portion when the mounting element is locked to the supporting beam.

In a practical embodiment the drain groove extends along the retaining portion, wherein an end region of at least one of the bottom portion and the retaining portion at a distance from the hook is inclined as seen from the drain groove such that in the assembled condition of the system a drainage opening is present between the end region and the rod, which drainage opening communicates with the drain groove. Consequently, in the mounted condition there is a space between the rod and the end region where condensate is guided from the rod towards the drain groove. This embodiment is typically applicable when the mounting element is applied at a gutter profile of a greenhouse, wherein the rod extends at an inclination upwardly from the gutter profile.

The mounting element may also be lockable to the supporting beam in transverse direction of the supporting beam in a direction towards the supporting beam. This is advantageous when the rod has an inclined orientation and extends upwardly from the supporting beam in a mounted condition. In that case the mounting element may abut the supporting beam in a direction towards the supporting beam. Alternatively or additionally, the rod may abut the supporting beam in a direction towards the supporting beam in the assembled condition of the system.

In practice the groove and the hook may be complementary so as to lock the mounting element in transverse direction of the supporting beam in a direction towards and away from the supporting beam.

The invention will hereafter be elucidated with reference to very schematic drawings showing an embodiment of the invention by way of example.
Fig. 1 is a cross-sectional view of a part of a roof of a greenhouse comprising an embodiment of the system for attaching a supporting beam and a rod to each other according to the invention.
Fig. 2 is an enlarged view of a part of Fig. 1.
Fig. 3 is a perspective view of a part of the embodiment as shown in Fig. 1.
Fig. 4 is a perspective view of an embodiment of a mounting element according to the invention.
Fig. 5 is a similar view as Fig. 4, but showing the mounting element from a different view.

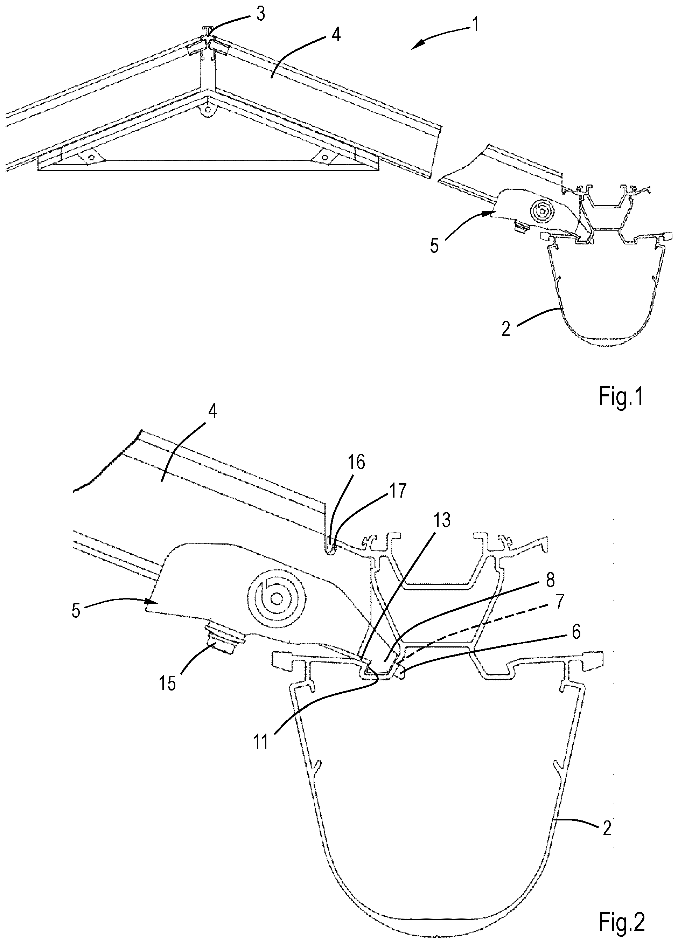

Fig. 1 shows a part of a roof 1 of a Venlo-type greenhouse. The roof 1 is provided with at least two parallel supporting beams in the form of gutter profiles 2. One of the gutter profiles 2 is shown in Figs. 1-3. The gutter profiles 2 are supported by respective rows of uprights (not shown) and are made of extruded aluminium. The roof 1 is further provided with a ridge 3 that extends between and above two gutter profiles 2 and rods 4 that connect the ridge 3 to each of the gutter profiles 2. The rods 4 are also made of extruded aluminium. The rods 4 extend perpendicularly to the ridge 3 and the gutter profiles 2 at equal intervals along the ridge 3 and the gutter profiles 2. Glass panes (not shown) are fitted between the rods 4, the gutter profiles 2 and the ridge 3.

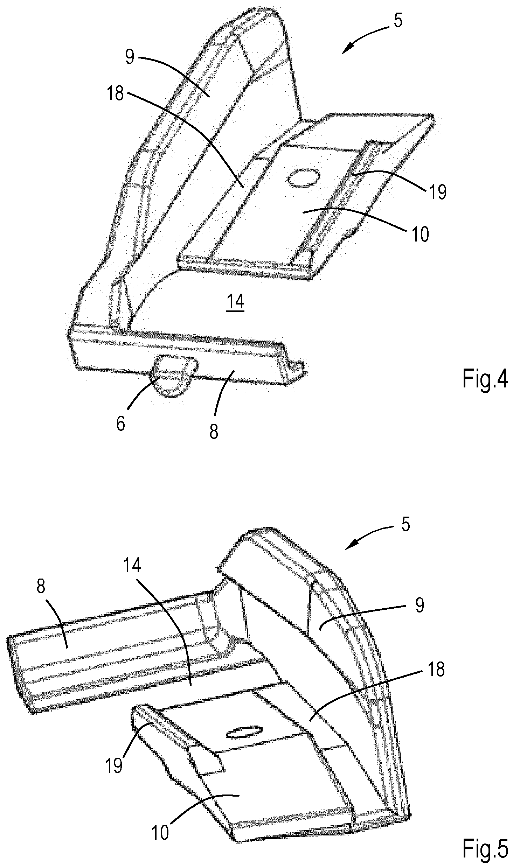

Figs. 1-3 show how one of the rods 4 is supported by one of the gutter profiles 2 and illustrate an embodiment of a system for mounting the gutter profile 2 and the rod 4 to each other according to the invention. The system comprises the gutter profile 2, the rod 4 and a mounting element 5. An embodiment of the mounting element 5 is shown as a separate part in Figs. 4 and 5. In the embodiment as shown it is made from one piece, for example by means of a casting process. It may be made of aluminium, but alternative materials are conceivable. The mounting element 5 is provided with a projection 6 which fits in a complementary through-hole 7 in the gutter profile 2. The gutter profile 2 is provided with a plurality of similar through-holes 7 at locations where the corresponding rods 4 may be mounted to the gutter profile 2. The distance between each pair of neighbouring through-holes 7 in longitudinal direction of the gutter profile 2 may be substantially equal. The projection 6 and the complementary through-hole 7 serve to lock the mounting element 5 to the gutter profile 2 in longitudinal direction of the gutter profile 2.

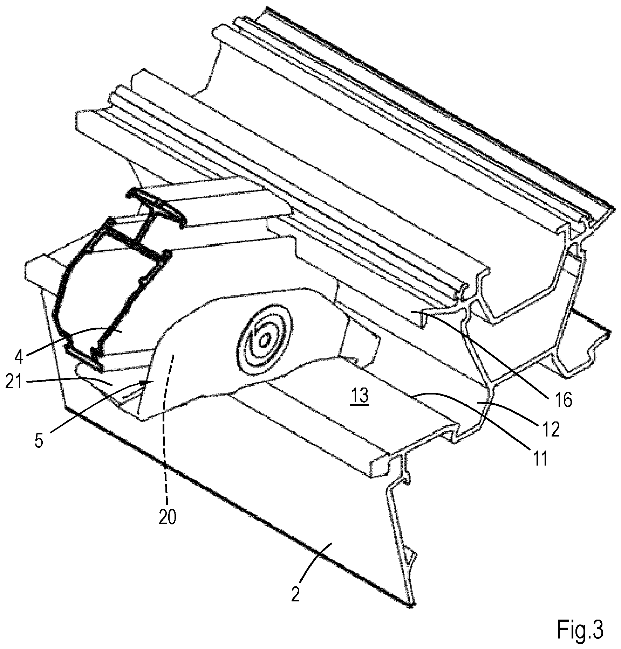

Furthermore, the mounting element 5 is provided with a hook 8, a plate-shaped retaining portion 9 and a plate-shaped bottom portion 10. The hook 8 is an elongated member which extends in longitudinal direction of the gutter profile 2 when it is mounted to the gutter profile 2. The hook 8 is engageable behind an edge 11 of the gutter profile 2. The edge 11 is formed by a side wall of a groove 12, see Fig. 3, and extends in longitudinal direction of the gutter profile 1 along a rod supporting surface 13 which directly supports the rod 4 in assembled condition of the system. In this case the rod supporting surface 13 extends adjacent to the groove 12 and has an inclined region on which the rod 4 rests in the assembled condition of the system.

The retaining portion 9 extends transversely with respect to the longitudinal direction of the gutter profile 2 when the mounting element 5 is mounted to the gutter profile 2. The hook 8 has opposite ends in its longitudinal direction. The retaining portion 9 extends from one of the opposite ends, whereas the other end of the hook 8 is a free end. The projection 6 is located on an outer side of the hook 8 which is directed to the gutter profile 2 in assembled condition of the system. The projection 6 serves to lock the mounting element 5 to the gutter profile 2 in longitudinal direction thereof, whereas the hook 8 serves to lock the mounting element 5 to the gutter profile 2 in transverse direction of the gutter profile 2 in a direction away therefrom, i.e. in outward direction.

The hook 8 is complementary to the groove 12 of the gutter profile 2, such that the mounting element 5 is locked to the gutter profile 2 in transverse direction of the gutter profile 2 in a direction towards the gutter profile 2 in assembled condition of the system, see Fig. 2.

Figs. 4 and 5 show that the bottom portion 10 and the hook 8 extend in the same direction from the retaining portion 9 leaving an opening 14 between the bottom portion 10 and the hook 8. The bottom portion 10 extends in transverse direction of the retaining portion 9 and can be fixed to a lower side of the rod 4 by a screw 15 which passes through a through-hole in the bottom portion 10 and is screwed in the rod 4. It is noted that the mounting element 5 and the rod 4 can be fixed to each other by alternative fixing means, such as a clip, a bracket, or the like. The retaining portion 9 is adapted such that it bridges the rod supporting surface 13 without resting on the rod supporting surface 13.

The bottom portion 10 is also provided with an upwardly directed rib 19 which extends parallel to the retaining portion, but which is lower than the retaining portion 9 as seen from the bottom portion 10. The rib 19 locks the rod 4 in assembled condition such that the rod 4 does not move in a direction from the retaining portion 9 to the rib 19, and prevents the rod 4 from rotating with respect to the mounting element 5 about an axis which extends perpendicular to the plane of the bottom portion 10.

In fact the mounting element 5 has a U-shape, of which one leg is formed by the bottom portion 10 and the other leg is formed by the hook 8, wherein both legs project from the retaining portion 9. The hook 8 and the bottom portion 10 lie in a first plane whereas the retaining portion 9 extends in a second plane transversely with respect to the first plane.

The mounting element 5 can be mounted to the gutter profile 2 by inserting the projection 6 into the cooperating through-hole 7 at an inclined orientation of the mounting element 5 after which the mounting element 5 is turned downwardly about the through-hole 7 so as to introduce the hook 8 into the groove 12. Since the hook 8 is complementary to the groove 12 of the gutter profile 2 and the projection 6 is complementary to the through-hole 7 the mounting element 5 remains in the inclined orientation as shown in Figs. 1-3, but still without the rod 4 being placed. There may be some play, such that the inclination of the mounting element 5 is less steep in this condition than shown in the assembled condition as illustrated in Figs. 1-3. In a next step the rod 4 can be mounted to the gutter profile 2 by putting an end portion of the rod 4 onto the rod supporting surface 13 of the gutter profile 2 whereas keeping the rod 4 in a horizontal orientation. At this stage the end portion can be placed on the rod supporting surface 13 at a distance from the mounting element 5 such that the bottom portion 10 lies between the rod 4 and the retaining portion 9. Subsequently, the rod 4 can be lifted at a distance from the gutter profile 2 such that the rod 4 rotates with respect to the gutter profile 2 and a downwardly directed rim 16 of the gutter profile 2 engages a slot 17 in an upper side of the rod 4. Subsequently, the rod 4 can be slid along the gutter profile 2 to the mounting element 5 until the rod 4 abuts the retaining portion 9. This is a predefined mutual position of the rod 4 and the mounting element 5. The rib 19 is dimensioned such and the above-mentioned play is such that the rib 19 does not obstruct the sliding movement of the rod 4 towards the retaining portion 9. After that the mounting element 5 can be turned such that the bottom portion 10 contacts the rod 4, and the mounting element 5 and the rod 4 can be fixed to each other through attaching the bottom portion 10 to the rod 4 by means of the screw 15. Hence, the retaining portion 9 retains the rod 4 with respect to the mounting element 5 in longitudinal direction of the gutter profile 2 when the mounting element 5 is locked to the gutter profile 2 and the mounting element 5 and the rod 4 are still in a non-attached condition in their predefined mutual position. In the assembled condition of the system the rod 4 directly rests on the rod supporting surface 13 because of the presence of the opening 14 between the hook 8 and the bottom portion 10. Afterwards, the rod 4 can also be fixed to the ridge 3.

In the embodiment as shown in the figures the rod 4 is fixed to the gutter profile 2 by the connection between the rim 16 of the gutter profile 2 and the slot 17 in the rod 4 as well as through the mounting element 5. This provides a double locking of the rod 4 to the gutter profile 2 in longitudinal direction of the rod 4, which is advantageous to withstand high loads due to wind and/or large glass panes between the rods 4. Besides, an end of the rod 4 also abuts the gutter profile 2. It is noted that a lock between the rim 16 and the slot 17 may be replaced by alternative locking means to lock the rod 4 and the gutter profile 2 to each other in longitudinal direction of the rod 4. It is also possible that the rod 4 is only locked to the gutter profile 2 through the mounting element 5.

The bottom portion 10 of the mounting element 5 is provided with a drain groove 18 for draining condensate from the rod 4 to the gutter profile 2. In the assembled condition of the system condensate may be guided via the drain groove 18 to the opening 14 and then drop onto the rod supporting surface 13 and flow to drain holes (not shown) in the gutter profile 2. In the embodiment as shown the drain groove 18 extends along the retaining portion 9. In order to guide the condensate to the drain groove 18 an end region of the retaining portion 9 at a distance from the hook 8 is inclined outwardly as seen from the drain groove 18 so as to create a funnel-shaped drainage opening 20 between the retaining portion 9 and the rod 4 in the assembled condition of the system, see fig. 3. Similarly, an end region of the bottom portion 10 at a distance from the hook 8 is inclined as seen from the drain groove 18 so as to create a funnel-shaped drainage opening 21 between the bottom portion 10 and the rod 4 in the assembled condition. The drainage openings 20, 21 between the rod 4, on the one hand, and the bottom portion 10 and the retaining portion 9, on the other hand communicate with the drain groove 18 and are shaped such that condensate is guided towards the draining groove 18.

The invention is not limited to the embodiment shown in the drawings and described hereinbefore, which may be varied in different manners within the scope of the claims and their technical equivalents. For example, the mounting element may be applied to attach a supporting beam and a rod to each other in a frame structure which is different from a greenhouse.

## Claims

1. A mounting element (5) for mounting a supporting beam (2) and a rod (4) to each other, such as in a roof (1) of a greenhouse, such that in a mounted condition the rod (4) is supported by the supporting beam (2) and extends transversely with respect to the supporting beam (2), the mounting element (5) being attachable to the rod (4) in a predefined mutual position of the rod (4) and the mounting element (5), the mounting element (5) comprising a retaining portion (9) for retaining a rod (4) with respect to the mounting element (5) in longitudinal direction of the supporting beam (2) when the mounting element (5) is locked to the supporting beam (2) and the mounting element (5) and the rod (4) are in a non-attached condition in a predefined mutual position and a hook (8) which is engageable behind an edge (11) of the supporting beam (2) so as to lock the mounting element (5) to the supporting beam (2) in transverse direction of the supporting beam (2) in a direction away therefrom, wherein the hook (8) is an elongated member extending in longitudinal direction of the supporting beam (2) when the mounting element (5) is locked to the supporting beam (2), wherein the hook (8) has two opposite ends in its longitudinal direction, **characterized in that** the retaining portion (9) extends from one end of the hook (8) in transverse direction of the longitudinal direction of the hook (8), whereas the other end is a free end, and **in that** the mounting element (5) is provided with a projection (6) which fits in a complementary hole (7) in the supporting beam (2) so as to lock the mounting element (5) to the supporting beam (2) in longitudinal direction of the supporting beam (2).

2. A mounting element (5) according to claim 1, wherein the retaining portion (9) comprises a plate, which extends transversely with respect to the longitudinal direction of the hook (8).

3. A mounting element (5) according to claim 1 or 2, wherein the mounting element (5) is provided with a bottom portion (10) to be coupled to a lower side of the rod (4), which bottom portion (10) extends in transverse direction of the retaining portion (9).

4. A mounting element (5) according to claim 3, wherein the bottom portion (10) and the hook (8) extend in the same direction from the retaining portion (9) leaving an opening (14) between the bottom portion (10) and the hook (8).

5. A mounting element (5) according to claim 3 or 4, wherein the bottom portion (10) is provided with a drain groove (18) for draining condensate from the rod (4) to the supporting beam (2) in an assembled condition of the system.

6. A mounting element (5) according to claim 5, wherein the drain groove (18) extends along the retaining portion (9), wherein an end region of at least one of the bottom portion (10) and the retaining portion (9) at a distance from the hook (8) is inclined as seen from the drain groove (18) such that in the assembled condition of the system a drainage opening (20, 21) is present between the end region and the rod (4), which drainage opening communicates with the drain groove (18).

7. A mounting element (5) according to one of the preceding claims, wherein the projection projects from the hook (8).

8. A system for mounting a supporting beam (2) and a rod (4) to each other, such as in a roof (1) of a greenhouse, comprising a supporting beam (2), a rod (4) which is mountable to the supporting beam (2) such that in a mounted condition the rod (4) is supported by the supporting beam (2) and extends transversely with respect to the supporting beam (2), and a mounting element (5) which is attachable to the rod (4) in a predefined mutual position of the rod (4) and the mounting element (5) which mounting element (5) comprises a retaining portion (9) for retaining a rod (4) with respect to the mounting element (5) in longitudinal direction of the supporting beam (2) when the mounting element (5) is locked to the supporting beam (2) and the mounting element (5) and the rod (4) are in a non-attached condition in a predefined mutual position and a hook (8) which is engageable behind an edge (11) of the supporting beam (2) so as to lock the mounting element (5) to the supporting beam (2) in transverse direction of the supporting beam (2) in a direction away therefrom, wherein the hook (8) is an elongated member extending in longitudinal direction of the supporting beam (2) when the mounting element (5) is locked to the supporting beam (2), wherein the hook (8) has two opposite ends in its longitudinal direction, **characterized in that** the retaining portion (9) extends from one end of the hook (8) in transverse direction of the longitudinal direction of the hook (8), whereas the other end is a free end, wherein the mounting element (5) is lockable to the supporting beam (2) in longitudinal direction of the supporting beam (2) and in transverse direction of the supporting beam (2) at least in a direction away therefrom.

9. A system according to claim 8, wherein the edge (11) of the supporting beam (2) is formed by a groove (12) which extends in longitudinal direction of the supporting beam (2) along a rod supporting surface (13) for supporting the rod (4) .

10. A system according to claim 8 or 9, wherein in an assembled condition of the system the rod (4) is directly supported by the supporting beam (2) at a distance from the hook (8) in a direction away from the supporting beam (2).

11. A system according to one of the claims 8-10, wherein the mounting element (5) is lockable to the supporting beam (2) in transverse direction of the supporting beam (2) in a direction towards the supporting beam (2).

12. A system according to claims 9 and 11, wherein the groove (12) and the hook (8) are complementary so as to lock the mounting element (5) in transverse direction of the supporting beam (2) in a direction towards and away from the supporting beam (2).

13. A system according to one of the claims 8-12, wherein the mounting element (5) is provided with a projection (6) which fits in a complementary hole (7) in the supporting beam (2).

14. A system according to claim 13, wherein the projection projects from the hook (8).

## Patentansprüche

1. Befestigungselement (5) zum Befestigen eines Tragbalkens (2) und einer Stange (4) aneinander, beispielsweise in einem Dach (1) eines Gewächshauses, so dass die Stange (4) in einem befestigten Zustand von dem Tragbalken (2) getragen wird und sich quer zum Tragbalken (2) erstreckt, wobei das Befestigungselement (5) an der Stange (4) in einer vordefinierten gegenseitigen Position der Stange (4) und des Befestigungselements (5) befestigbar ist, das Befestigungselement (5) einen Halteabschnitt (9), um eine Stange (4) in Bezug auf das Befestigungselement (5) in Längsrichtung des Tragbalkens (2) zu halten, wenn das Befestigungselement (5) am Tragbalken (2) verriegelt ist und sich das Befestigungselement (5) und die Stange (4) in einem nicht befestigten Zustand in einer vordefinierten gegenseitigen Position befinden, und einen Haken (8) aufweist, der hinter einer Kante (11) des Tragbalkens (2) in Eingriff gebracht werden kann, um das Befestigungselement (5) am Tragbalken (2) in Querrichtung des Tragbalkens (2) in einer Richtung weg von diesem zu verriegeln, wobei der Haken (8) ein längliches Element ist, das sich in Längsrichtung des Tragbalkens (2) erstreckt, wenn das Befestigungselement (5) mit dem Tragbalken (2) verriegelt ist, wobei der Haken (8) zwei gegenüberliegende Enden in seiner Längsrichtung hat, **dadurch gekennzeichnet, dass** sich der Halteabschnitt (9) von einem Ende des Hakens (8) in Querrichtung der Längsrichtung des Hakens (8) erstreckt, während das andere Ende ein freies Ende ist, und dass das Befestigungselement (5) mit einem Vorsprung (6) versehen ist, der in ein komplementäres Loch (7) im Tragbalken (2) passt, um das Befestigungselement (5) am Tragbalken (2) in Längsrichtung des Tragbalkens (2) zu verriegeln.

2. Befestigungselement (5) nach Anspruch 1, wobei der Halteabschnitt (9) eine Platte aufweist, die sich in Bezug zur Längsrichtung des Hakens (8) quer erstreckt.

3. Befestigungselement (5) nach Anspruch 1 oder 2, wobei das Befestigungselement (5) mit einem unteren Abschnitt (10) versehen ist, der mit einer Unterseite der Stange (4) gekoppelt werden soll, wobei sich der untere Abschnitt (10) in Querrichtung des Halteabschnitts (9) erstreckt.

4. Befestigungselement (5) nach Anspruch 3, wobei sich der untere Abschnitt (10) und der Haken (8) in derselben Richtung vom Halteabschnitt (9) erstrecken und eine Öffnung (14) zwischen dem unteren Abschnitt (10) und dem Haken (8) freilassen.

5. Befestigungselement (5) nach Anspruch 3 oder 4, wobei der untere Abschnitt (10) mit einer Ablaufnut (18) zum Ableiten von Kondensat von der Stange (4) zum Tragbalken (2) in einem montierten Zustand des Systems versehen ist.

6. Befestigungselement (5) nach Anspruch 5, wobei sich die Ablaufnut (18) entlang des Halteabschnitts (9) erstreckt, wobei ein Endbereich des unteren Abschnitts (10) und/oder des Halteabschnitts (9) von der Ablaufnut (18) gesehen in einem Abstand vom Haken (8) geneigt ist, so dass im montierten Zustand des Systems eine Ablauföffnung (20, 21) zwischen dem Endbereich und der Stange (4) vorhanden ist, wobei die Ablauföffnung mit der Ablaufnut (18) in Verbindung steht.

7. Befestigungselement (5) nach einem der vorhergehenden Ansprüche, wobei der Vorsprung aus dem Haken (8) vorsteht.

8. System zur Befestigung eines Tragbalkens (2) und einer Stange (4) aneinander, beispielsweise in einem Dach (1) eines Gewächshauses, das einen Tragbalken (2), eine Stange (4), die an dem Tragbalken (2) so befestigbar ist, dass die Stange (4) in einem befestigten Zustand von dem Tragbalken (2) getragen wird und sich quer zum Tragbalken (2) erstreckt, und ein Befestigungselement (5) aufweist, das an der Stange (4) in einer vordefinierten gegenseitigen Position der Stange (4) und des Befestigungselements (5) befestigbar ist, wobei das Befestigungselement (5) einen Halteabschnitt (9) zum Halten einer Stange (4) in Bezug auf das Befestigungselement (5) in Längsrichtung des Tragbalkens (2), wenn das Befestigungselement (5) am Tragbalken (2) verriegelt ist und sich das Befestigungselement (5) und die Stange (4) in einem nicht befestigten Zustand in einer vordefinierten gegenseitigen Position befinden, und einen Haken (8) aufweist, der hinter einer Kante (11) des Tragbalkens (2) in Eingriff gebracht werden kann, um das Befestigungselement (5) am Tragbalken (2) in Querrichtung des Tragbalkens (2) in einer Richtung weg von diesem zu verriegeln, wobei der Haken (8) ein längliches Element ist, das sich in Längsrichtung des Tragbalkens (2) erstreckt, wenn das Befestigungselement (5) mit dem Tragbalken (2) verriegelt ist, wobei der Haken (8) zwei gegenüberliegende Enden in seiner Längsrichtung hat, **dadurch gekennzeichnet, dass** sich der Halteabschnitt (9) von einem Ende des Hakens (8) in Querrichtung der Längsrichtung des Hakens (8) erstreckt, während das andere Ende ein freies Ende ist, wobei das Befestigungselement (5) am Tragbalken (2) in Längsrichtung des Tragbalkens (2) und in Querrichtung des Tragbalkens (2) mindestens in einer Richtung von diesem weg verriegelbar ist.

9. System nach Anspruch 8, wobei der Rand (11) des Tragbalkens (2) durch eine Nut (12) gebildet ist, die sich in Längsrichtung des Tragbalkens (2) entlang einer Stangenauflagefläche (13) zur Tragen der Stange (4) erstreckt.

10. System nach Anspruch 8 oder 9, wobei die Stange (4) in einem montierten Zustand des Systems direkt vom Tragbalken (2) in einem Abstand vom Haken (8) in einer Richtung weg von dem Tragbalken (2) getragen wird.

11. System nach einem der Ansprüche 8 bis 10, wobei das Befestigungselement (5) am Tragbalken (2) in Querrichtung des Tragbalkens (2) in Richtung zum Tragbalken (2) verriegelbar ist.

12. System nach Anspruch 9 und 11, wobei die Nut (12) und der Haken (8) komplementär sind, um das Befestigungselement (5) in Querrichtung des Tragbalkens (2) in einer Richtung zum Tragbalken (2) und von diesem weg zu verriegeln.

13. System nach einem der Ansprüche 8 bis 12, wobei das Befestigungselement (5) mit einem Vorsprung (6) versehen ist, der in ein komplementäres Loch (7) im Tragbalken (2) passt.

14. System nach Anspruch 13, wobei der Vorsprung aus dem Haken (8) vorsteht.

## Revendications

1. Élément de montage (5) pour le montage d'une poutre de support (2) et d'une tige (4) l'une sur l'autre, comme dans un toit (1) d'une serre de sorte que dans une condition montée, la tige (4) soit supportée par la poutre de support (2) et s'étende transversalement par rapport à la poutre de support (2), l'élément de montage (5) pouvant être attaché à la tige (4) dans une position mutuelle prédéfinie de la tige (4) et de l'élément de montage (5), l'élément de montage (5) comprenant une partie de retenue (9) pour la retenue d'une tige (4) par rapport à l'élément de montage (5) dans la direction longitudinale de la poutre de support (2) lorsque l'élément de montage (5) est verrouillé à la poutre de support (2) et l'élément de montage (5) et la tige (4) sont dans une condition non attachée dans une position mutuelle prédéfinie et un crochet (8) qui peut être engagé derrière une arête (11) de la poutre de support (2) de sorte à verrouiller l'élément de montage (5) à la poutre de support (2) dans la direction transversale de la poutre de support (2) dans une direction loin de celle-ci, dans lequel le crochet (8) est un élément allongé s'étendant dans la direction longitudinale de la poutre de support (2) lorsque l'élément de montage (5) est verrouillé à la poutre de support (2), dans lequel le crochet (8) présente deux extrémités opposées dans sa direction longitudinale, **caractérisé en ce que** la partie de retenue (9) s'étend depuis une extrémité du crochet (8) dans la direction transversale de la direction longitudinale du crochet (8), alors que l'autre extrémité est une extrémité libre, et **en ce que** l'élément de montage (5) est doté d'une projection (6) qui s'insère dans un trou complémentaire (7) dans la poutre de support (2) de sorte à verrouiller l'élément de montage (5) à la poutre de support (2) dans la direction longitudinale de la poutre de support (2).

2. Élément de montage (5) selon la revendication 1, dans lequel la partie de retenue (9) comprend une plaque qui s'étend transversalement par rapport à la direction longitudinale du crochet (8).

3. Élément de montage (5) selon la revendication 1 ou 2, dans lequel l'élément de montage (5) est doté d'une partie inférieure (10) à coupler à un côté inférieur de la tige (4), laquelle partie inférieure (10) s'étend dans la direction transversale de la partie de retenue (9).

4. Élément de montage (5) selon la revendication 3, dans lequel la partie inférieure (10) et le crochet (8) s'étendent dans la même direction depuis la partie de retenue (9) laissant une ouverture (14) entre la partie inférieure (10) et le crochet (8).

5. Élément de montage (5) selon la revendication 3 ou 4, dans lequel la partie inférieure (10) est dotée d'une rainure de drainage (18) pour le drainage de condensat de la tige (4) à la poutre de support (2) dans une condition assemblée du système.

6. Élément de montage (5) selon la revendication 5, dans lequel la rainure de drainage (18) s'étend le long de la partie de retenue (9), dans lequel une région d'extrémité d'au moins une de la partie inférieure (10) et de la partie de retenue (9) à une distance du crochet (8) est inclinée comme vu depuis la rainure de drainage (18) de sorte que dans la condition assemblée du système, une ouverture de drainage (20, 21) soit présente entre la région d'extrémité et la tige (4), laquelle ouverture de drainage communique avec la rainure de drainage (18).

7. Élément de montage (5) selon l'une des revendications précédentes, dans lequel la projection fait saillie du crochet (8).

8. Système de montage d'une poutre de support (2) et d'une tige (4) l'une sur l'autre, comme dans un toit (1) d'une serre, comprenant une poutre de support (2), une tige (4) qui peut être montée sur la poutre de support (2) de sorte que dans une condition montée, la tige (4) soit supportée par la poutre de support (2) et s'étende transversalement par rapport à la poutre de support (2), et un élément de montage (5) qui peut être attaché à la tige (4) dans une position mutuelle prédéfinie de la tige (4) et de l'élément de montage (5), lequel élément de montage (5) comprend une partie de retenue (9) pour la retenue d'une tige (4) par rapport à l'élément de montage (5) dans une direction longitudinale de la poutre de support (2) lorsque l'élément de montage (5) est verrouillé à la poutre de support (2) et l'élément de montage (5) et la tige (4) sont dans une condition non attachée dans une position mutuelle prédéfinie et un crochet (8) qui peut être engagé derrière une arête (11) de la poutre de support (2) de sorte à verrouiller l'élément de montage (5) à la poutre de support (2) dans la direction transversale de la poutre de support (2) dans une direction loin de celle-ci, dans lequel le crochet (8) est un élément allongé s'étendant dans la direction longitudinale de la poutre de support (2) lorsque l'élément de montage (5) est verrouillé à la poutre de support (2), dans lequel le crochet (8) présente deux extrémités opposées dans sa direction longitudinale, **caractérisé en ce que** la partie de retenue (9) s'étend depuis une extrémité du crochet (8) dans la direction transversale de la direction longitudinale du crochet (8), alors que l'autre extrémité est une extrémité libre, dans lequel l'élément de montage (5) peut être verrouillé à la poutre de support (2) dans la direction longitudinale de la poutre de support (2) et dans la direction transversale de la poutre de support (2) au moins dans une direction loin de celle-ci.

9. Système selon la revendication 8, dans lequel l'arête (11) de la poutre de support (2) est formée par une rainure (12) qui s'étend dans la direction longitudinale de la poutre de support (2) le long d'une surface de support de tige (13) pour le support de la tige (4).

10. Système selon la revendication 8 ou 9, dans lequel dans une condition assemblée du système, la tige (4) est directement supportée par la poutre de support (2) à une distance du crochet (8) dans une direction loin de la poutre de support (2).

11. Système selon l'une des revendications 8 à 10, dans lequel l'élément de montage (5) peut être verrouillé à la poutre de support (2) dans la direction transversale de la poutre de support (2) dans une direction vers la poutre de support (2).

12. Système selon les revendications 9 et 11, dans lequel la rainure (12) et le crochet (8) sont complémentaires de sorte à verrouiller l'élément de montage (5) dans la direction transversale de la poutre de support (2) dans une direction vers la poutre de support (2) et loin de celle-ci.

13. Système selon l'une des revendications 8 à 12, dans lequel l'élément de montage (5) est doté d'une projection (6) qui s'insère dans un trou complémentaire (7) dans la poutre de support (2).

14. Système selon la revendication 13, dans lequel la projection fait saillie du crochet (8).
